# EUROPEAN PATENT APPLICATION

(11) **EP 4 202 292 A1**
(43) Date of publication of application: **28.06.2023**
(21) Application number: 21216552.6
(22) Date of filing: 21.12.2021
(51) Int. Cl.: F21S 45/60, B60Q 1/00, F21S 41/20

(54) **AUTOMOTIVE LIGHTING DEVICE AND AUTOMOTIVE VEHICLE**

(71) Applicant: Valeo Vision, 93012 Bobigny Cedex (FR)
(72) Inventor: MIMOUN, Mickael, 93012 BOBIGNY (FR); RENAUD, Pierre, 93012 BOBIGNY (FR); PLANCHE, Gregory, 93012 BOBIGNY (FR); EL IDRISSI, Hafid, 93012 BOBIGNY (FR)
(74) Representative: Valeo Visibility

(57) **Abstract**

The present invention refers to an automotive lighting device (1) comprising at least one light source (2) configured to emit light, an outer lens, at least one luminous sensor (4) configured to acquire a portion of a reflection of the projected light and processing means (3) configured to control the operation of the light sources and to receive data from the luminous sensors. The outer lens comprises de-icing means, these de-icing means comprising carbon nano-tubes.

## Description

This invention is related to the field of automotive lighting devices, and more particularly, to the ones used to detect objects surrounding the vehicle.

Driving assistance comprises the use of sensors to inform the driver (or to directly inform the vehicle) of objects surrounding the vehicle. This is extremely useful for autonomous driving, but also for

To achieve this goal, sensors play a crucial role, since they receive the information from the exterior of the vehicle, containing the data that will be interpreted in order to create a map of the surrounding objects.

There are many different sensors which are intended to accomplish this mission. Most of them use ultrasound, with acoustic pulses. Cameras are also adapted to acquire infrared or visible ambient light.

In some cases, when this is implemented in an existing lighting device, ice formed in the optical parts of this existing device may perturbate the light received by the luminous sensors. A way of avoid this perturbance is therefore sought.

The present invention provides an alternative solution for the problem of by means of an automotive lighting device which comprises
- at least one light source configured to emit light;
- an outer lens;
- at least one luminous sensor configured to acquire a portion of a reflection of the projected light; and
- processing means configured to control the operation of the light sources and to receive data from the luminous sensors
- wherein the outer lens comprises de-icing means, these de-icing means comprising carbon nano-tubes.

This lighting device uses the light emitted by the light sources which are in charge of the lighting or signalling functions in order to obtain information about the surrounding objects. There is therefore no need to use an additional light source, or ultrasound devices. The same device which is used for lighting functions (such as a Low Beam LB, a High Beam HB, a Daytime Running Light DRL, a Position Light PL, a Stop Light, a Reverse Light, a Corner Light CL, or a Turn Indicator TI) may also be used for objects detecting. Further, the fact that the outer lens has a de-icing means with nanotubes makes it possible to avoid ice formation in the outer lens without affecting the thermal gradient of the same, so that the refractive index is not altered. Hence, the luminous sensor is able to see through the lens without major problem.

In some particular embodiments, the light sources are solid-state light sources.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the lifespan of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

In some particular embodiments, the carbon nanotubes are comprised on a film which is deposited on at least a portion of the outer lens.

The carbon nanotubes can be mixed in the manufacturing process of the outer lens, but a simpler way of incorporating the nanotubes into the outer glass is the deposition of a film with the nanotubes on the same.

In some particular embodiments, the film is transparent to light emitted in a wavelength comprised between 420 nm to 650 nm.

With this configuration, the light which is usually employed in lighting and signalling functions can go through the film and the nanotubes without being distorted.

In some particular embodiments, the film is transparent to light emitted in a wavelength comprised between 380 nm to 720 nm.

With this configuration, any visible light may go through the film without being distorted. This is useful since in some cases, a different wavelength may be used for other purposes.

In some particular embodiments, the carbon nanotubes have a size lower than 50 nm.

The size of the nanotubes is an important parameter (although not the only one) to ensure an acceptable scattering coefficient, so that the light is not affected when crossing the nanotubes film.

In some particular embodiments, the solid-state light sources comprise light emitting diodes or laser diodes.

These types of light sources are widely used in automotive vehicles for driving lighting and signalling. With the present invention, the same light sources may also be used for objects detection.

In a second inventive aspect, the invention provides an automotive vehicle comprising an automotive lighting device according to the first inventive aspect.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

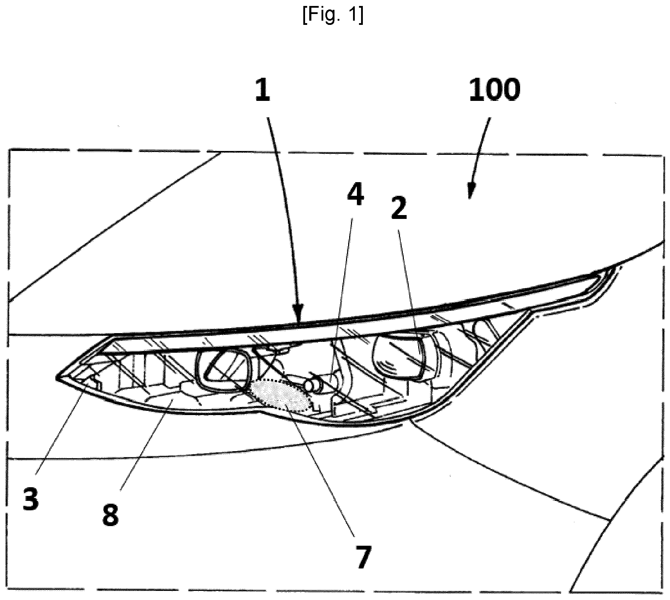

[Fig. 1] shows a general perspective view of an automotive lighting device according to the invention installed in an automotive vehicle.

In these figures, the following reference numbers are used for each of the following elements: [25] [26] [27] [28] [29] [30] [31]
- 1: Headlamp
- 2: LEDs
- 3: Processing unit
- 4: Photodiode
- 7: Portion of a lens with a carbon nanotubes film
- 8: Outer lens
- 100: Automotive vehicle

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included.

Figure 1 shows an automotive lighting device 1 according to the invention installed in an automotive vehicle 100.

In this figure, the following elements are seen
- a LED 2 in a lighting module, configured to emit light;
- an outer lens 8;
- a photodiode 4 configured to acquire a portion of a reflection of the projected light; and
- processing means 3 configured to control the operation of the light sources and to receive data from the luminous sensors
- wherein the outer lens 8 comprises a portion 7 which has a film with carbon nanotubes to prevent ice formation on the same.

The carbon nanotubes may be applied as such on the portion 7 of the outer lens 8 or may be applied within a substrate on such a portion 7. The application of carbon nanotubes on this particular portion 7 of the outer lens 8 modifies the properties of this portion, without significantly affecting the light received by the luminous sensor.

This is due to the size of the carbon nanotubes, which is 32 nm, the scattering coefficient is kept under 0.1. Hence, the light emitted by the different lighting and signalling functions of the headlamp is not altered by the nanotubes film.

Further, since the carbon nanotubes are a solution against ice deposition on the outer lens which does not involve any thermal gradient, the light is not affected either by this phenomenon.

This invention may be used in a matrix configuration such as a high-resolution module, having a resolution greater than 2000 pixels. However, no restriction is attached to the technology used for producing the projection modules.

A first example of this matrix configuration comprises a monolithic source. This monolithic source comprises a matrix of monolithic electroluminescent elements arranged in several columns by several rows. In a monolithic matrix, the electroluminescent elements can be grown from a common substrate and are electrically connected to be selectively activatable either individually or by a subset of electroluminescent elements. The substrate may be predominantly made of a semiconductor material. The substrate may comprise one or more other materials, for example non-semiconductors (metals and insulators). Thus, each electroluminescent element/group can form a light pixel and can therefore emit light when its/their material is supplied with electricity. The configuration of such a monolithic matrix allows the arrangement of selectively activatable pixels very close to each other, compared to conventional light-emitting diodes intended to be soldered to printed circuit boards. The monolithic matrix may comprise electroluminescent elements whose main dimension of height, measured perpendicularly to the common substrate, is substantially equal to one micrometre.

The monolithic matrix is coupled to the control centre so as to control the generation and/or the projection of a pixelated light beam by the matrix arrangement. The control centre is thus able to individually control the light emission of each pixel of the matrix arrangement.

Alternatively to what has been presented above, the matrix arrangement may comprise a main light source coupled to a matrix of mirrors. Thus, the pixelated light source is formed by the assembly of at least one main light source formed of at least one light emitting diode emitting light and an array of optoelectronic elements, for example a matrix of micro-mirrors, also known by the acronym DMD, for "Digital Micro-mirror Device", which directs the light rays from the main light source by reflection to a projection optical element. Where appropriate, an auxiliary optical element can collect the rays of at least one light source to focus and direct them to the surface of the micro-mirror array.

Each micro-mirror can pivot between two fixed positions, a first position in which the light rays are reflected towards the projection optical element, and a second position in which the light rays are reflected in a different direction from the projection optical element. The two fixed positions are oriented in the same manner for all the micro-mirrors and form, with respect to a reference plane supporting the matrix of micro-mirrors, a characteristic angle of the matrix of micro-mirrors defined in its specifications. Such an angle is generally less than 20° and may be usually about 12°. Thus, each micro-mirror reflecting a part of the light beams which are incident on the matrix of micro-mirrors forms an elementary emitter of the pixelated light source. The actuation and control of the change of position of the mirrors for selectively activating this elementary emitter to emit or not an elementary light beam is controlled by the control centre.

In different embodiments, the matrix arrangement may comprise a scanning laser system wherein a laser light source emits a laser beam towards a scanning element which is configured to explore the surface of a wavelength converter with the laser beam. An image of this surface is captured by the projection optical element.

The exploration of the scanning element may be performed at a speed sufficiently high so that the human eye does not perceive any displacement in the projected image.

The synchronized control of the ignition of the laser source and the scanning movement of the beam makes it possible to generate a matrix of elementary emitters that can be activated selectively at the surface of the wavelength converter element. The scanning means may be a mobile micro-mirror for scanning the surface of the wavelength converter element by reflection of the laser beam. The micro-mirrors mentioned as scanning means are for example MEMS type, for "Micro-Electro-Mechanical Systems". However, the invention is not limited to such a scanning means and can use other kinds of scanning means, such as a series of mirrors arranged on a rotating element, the rotation of the element causing a scanning of the transmission surface by the laser beam.

In another variant, the light source may be complex and include both at least one segment of light elements, such as light emitting diodes, and a surface portion of a monolithic light source.

## Claims

1. - Automotive lighting device (1) comprising
- at least one light source (2) configured to emit light;
- an outer lens (8);
- at least one luminous sensor (4) configured to acquire a portion of a reflection of the projected light; and
- processing means (3) configured to control the operation of the light sources and to receive data from the luminous sensors
- wherein the outer lens comprises de-icing means, these de-icing means comprising carbon nano-tubes.

2. - Automotive lighting device (1) according to claim 1, wherein the light sources are solid-state light sources.

3. - Automotive lighting device (1) according to claim 2, wherein the solid-state light sources comprise light emitting diodes or laser diodes.

4. - Automotive lighting device (1) according to any of the preceding claims, wherein the carbon nanotubes are comprised on a film (7) which is deposited on at least a portion of the outer lens (8).

5. - Automotive lighting device (1) according to claim 4, wherein the film is transparent to light emitted in a wavelength comprised between 420 nm to 650 nm.

6. - Automotive lighting device (1) according to claim 5, wherein the film is transparent to light emitted in a wavelength comprised between 380 nm to 720 nm.

7. - Automotive lighting device (1) according to any of the preceding claims, wherein the carbon nanotubes have a size lower than 50 nm.

8. - Automotive vehicle (100) comprising an automotive lighting device (1) according to any of the preceding claims.
